# EUROPEAN PATENT APPLICATION

(11) **EP 4 485 132 A1**
(43) Date of publication of application: **01.01.2025**
(21) Application number: 24185110.4
(22) Date of filing: 27.06.2024
(51) Int. Cl.: G06F 1/18, G06F 1/16, B64U 20/80

(54) **A MODULAR CONTROL SYSTEM FOR AUTONOMOUS VEHICLES**

(30) Priority: 27.06.2023 SK 902023
(71) Applicant: Airvolute s.r.o., 917 01 Trnava (SK)
(72) Inventor: Vrsansky, Tomas, 841 02 Bratislava (SK); Rodina, Jozef, 841 06 Bratislava-Záhorská Bystrica (SK)
(74) Representative: Majlingová, Zuzana

(57) **Abstract**

A modular control system for autonomous vehicles that includes a motherboard (5) that includes an FMU (4) and a computing module (3), where the motherboard (5) includes high-speed connectors (1) for connecting an expansion connector PCB (6) and connectors (2) to connect the PCB (7) with power electronics. In this way, it is possible to adjust the configuration of the power electronics and expansion connector PCB based on the requirements of a specific application. The mentioned system enables the use of one control system architecture for different types of autonomous vehicles such as multicopter drones, fixed-wing drones with vertical take-off, ground or sea drones.

## Description

### Technical field

The technical solution concerns a modular control system for autonomous vehicles such as UAV, UGV or USV. The modular system provides the possibility of quick hardware modifications according to the customer's requirements without the need for a time-consuming hardware redesign of the entire system.

The technical solution belongs to the field of electrical engineering, vehicles, automation and control systems.

### Background Art

Modern control systems for autonomous vehicles such as UAVs, UGVs or USVs typically consist of:
- an autopilot system consisting of an inertial measurement unit (IMU) and a corresponding microcontroller (hereinafter FMU), the purpose of which is low-level real time control based on the IMU and other external sensors. A typical example of such a device is the CUBE Orange hardware unit. From a software point of view, such autopilot systems usually use firmware such as Ardupilot, PX4 or other suitable alternatives. In terms of connectivity, these units typically include the following interfaces:
   ∘ PWM and PPM signal for connection of servos, electronic speed controllers (ESCs), connection of receiver related to remote control
   ∘ Serial interfaces USART, SPI, I2C
   ∘ Date interfaces USB and Ethernet
- a high-performance computing module, typically an embedded PC based on Linux OS, or e.g. high-performance computing modules based on FPGAs, GPUs or other specific computing accelerators. The task of these computing modules is to ensure flight autonomy, often using complex algorithms based on artificial intelligence, machine learning, machine vision... These computing modules also process data from sensors such as cameras, thermal imaging cameras, lidars, radars and similar sensors requiring complex processing of available data. In terms of connectivity, computing units mainly contain high-speed interfaces for transferring large volumes of data:
   ∘ 1Gb ethernet
   ∘ USB 2.0 and higher
   ∘ PCI Express
   ∘ MIPI-CSI to connect camera modules
   ∘ HDMI input/output
- Power supply modules ensuring stable supply of particular subsystems of the control system
- Communication modules, so called C2 modules, used to control the vehicle and transfer telemetry data
- Control modules for propulsion units of autonomous vehicles, such as:
   ∘ Rotor with electric motor and propeller
   ∘ Motor drives for wheeled, tracked and walking vehicles

Currently, control systems are often designed as hardware units fitting exactly the vehicle with very small degree of universality and modification possibilities. A frequent solution is a combination of the so-called autopilot system together with the computing unit on a single board with an ultimate combination of physical connector layout and power circuitry. Alternatively, the part of the power supply circuits and drive units is separated from the part containing the FMU and the computing unit with a layout of connectors that cannot be easily changed for other purposes.

The category of separated solutions is represented by a commonly used Raspberry Pi single-board computers together with an autopilot based on e.g. on the Ardupilot system (https://ardupilot.org/dev/docs/compan ion-computers.html).

System DroneCore.Suite 1.2 (https://airvolute.com/dronecore-1/) is an example of a solution with a finite layout of connectors.

### Summary of the invention

The subject-matter of the technical solution of the modular control system for autonomous vehicles is based on the fact that the basis of the system was separated from the printed circuit board providing various types of interfaces (the so-called expansion connector PCB) and from the PCB with power electronics implementing power circuits, control of propulsion units, and similar systems requiring power electronics. The system consists of a motherboard containing: FMU, computing module, and possibly also a microcontroller with IMU which can be used as a backup FMU, communication module (WIFI, BT, LTE, 4G, 5G, C2 communication modules), NVME SSD disk and ethernet switch. The motherboard also contains at least one high-speed connector for connecting an expansion connector PCB and at least one power connector for connecting a PCB with power electronics. The high-speed connector should have a transfer bandwidth of at least 1GBps. and wherein the power connector includes a connector for the power electronics and a connector for the signal part of the PCB with power electronics.

Thanks to this architecture, it is possible to quickly modify the configuration of interfaces and power electronics just by redesigning the expansion connector PCB and PCB with power electronics which significantly reduces the development costs of the control system related to the given autonomous vehicle.

A PCB with power electronics includes voltage regulators and possibly current sensing circuits, power switches, supply voltage distribution traces, anti-spark unit, power selector, battery charging and management circuits and others.

The expansion connector PCB contains FMU interfaces and computing module interfaces and can optionally contain additional expansion circuits providing additional functionality such as logic level converters (sensors, communication circuits or actuators do not have the same voltage levels and need to be adapted), or bus-to-bus converters (such as e.g. CAN to SPI, UART to RS232, MIPI CSI to GMSL), communication modules (LTE, 5G, satellite communication module), HDMI to CSI converter for video input, HDMI to analog signal converter for video transmitter, USB to UART or USB to PWM converter, GMSL converters, LED light drivers or other types of interfaces not directly supported by the original system.

Such a configuration preserves the overall compactness of the system without the need to connect additional electronic modules through additional cabling, which usually complicates the overall mechanical solution, as there is no need to place these modules in the fuselage of the autonomous vehicle and also no need to procure the relevant cabling for them. Many modules connected by cables also increase the probability of failure and thereby reduce the overall reliability of the system.

The modular control system according to the presented invention may include one or more expansion connector PCBs that are connected to the main board via high-speed connectors and one or more PCBs with power electronics connected to the main board via power connectors.

According to the advantageous embodiment, Hirose FX10 series connectors are used to connect the expansion connector PCB (high-speed connector - 15+ Gbps, with high density - 0.5 mm spacing, and the number of pins - 120).

The expansion connector PCB is preferably attached to the motherboard with mounting screws, which fit the mounting threads located on the motherboard.

In a preferred embodiment for connecting the PCB with power electronics, a Samtec mPOWER series connector is used for the power part ("board to board" connector with a current load of min. 5A per pin and a connection height of max. 6 mm) and an Amphenol series connector BergStak (miniature signal connector with the same connecting height as the "board to board" connector) is used for the signal part.

The PCB with power electronics is preferably attached to the motherboard with mounting screws, which fit the mounting threads located on the motherboard.

One of the reasons for the separation of the expansion connector PCB and the PCB with power electronics are the different properties of the individual PCBs, where optimization for high speeds is preferred for one, while high transmitted currents are preferred for the latter.

However, it is also possible to combine the expansion connector PCB and the PCB with power electronics into one board - a common carrier PCB. This can be preferably placed approx. in the middle (center of gravity) of the drone.

The common carrier PCB preferably contains most of the drone's electronic components (such as power circuits, autopilot, control computer, camera signal processing, video transmitter 11), while the battery, receiver and electronic speed controllers are also connected to it.

The common supporting PCB can contain supply voltage regulators at the 5V and 3.3V levels for the motherboard 5, possibly also a current sensor, a switch for the main power supply of the control and power electronics, and a circuit for measurement of the total current consumption. To increase reliability, voltage regulators can also be duplicated, while individual regulators are connected to each other, e.g. circuit of an ideal diode. Thanks to the connection of circuits of ideal diodes together with other supporting circuits, it is possible to prioritize individual power lines, and thus ensure backup power for the most critical components of the drone. A separate power regulator is used to connect the payload (such as a camera with a gimbal, e.g. to 12V or 24V as required. For powering servo drives, it is advisable to use dynamic power supply - e.g. in the mode without significant movements, the 5V power supply is used, but for the dynamic mode, it is advisable to increase this power supply, e.g. to 7V, which achieves both good dynamic properties and reasonable consumption.

Connector placement is specified by the location of the individual parts of the drone. JST GH connectors are typically used for connecting motor controllers, typically distributed on the sides of the PCB in the exact place where the communication outputs of these controllers are connected. Connectors for the servo drives controlling the control surfaces are similarly placed. The cameras have their typical location (facing forward, backward or down) and the location of the connector (e.g. on MIPI CSI) as well as the corresponding circuits (GMSL converter with Fakra connector) corresponds to this. GPS or a compass have their preferred location and therefore also the layout of the connectors.

This invention also relates to autonomous vehicles containing a modular control system according to this invention.

### Brief description of the drawings

Fig. 1. Motherboard with connectors to connect expansion connector PCB and PCB with power electronics
Fig. 2. Motherboard with connected expansion connector PCB and PCB with power electronics.
Fig. 3. Module for control of FPV drones with a common PCB.

### Examples

### Example 1 - Modular control system with separate expansion connector PCB and PCB with power electronics

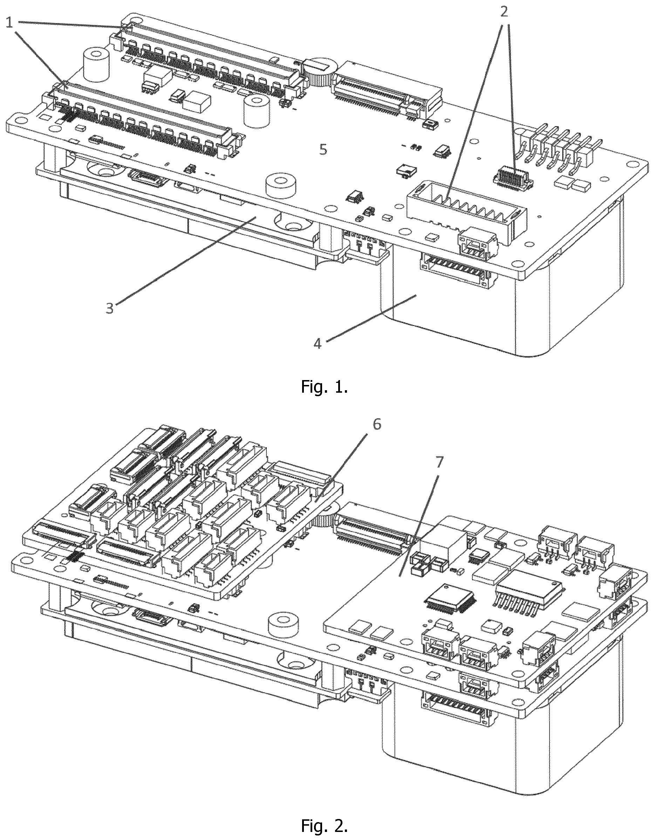

Motherboard 5, shown in fig. 1, contains a computing module 3, a FMU 4 together with an integrated Ethernet switch, a single-chip microcomputer with an IMU as a backup FMU, a communication module and NVME solid state drive, or an integrated FLASH. A high-speed connector 1 is intended for connection to an expansion connector PCB 6. The expansion connector PCB 6 (shown in Fig. 2) contains interfaces from the FMU 4 (UART, PWM, PPM, USB, ADC, I2C, SPI, CAN), the computing module interface 3 (HDMI, PCIe, MIPI/CSI, USB2.0 and above, ethernet, CAN) and additional expansion circuits. A power connector 2 serves to connect a PCB 7 with power electronics. The power connector 2 contains multiple power lines and communication lines such as PWM, ADC, CAN, I2C.

The main advantage of the mentioned solution is the ability to quickly and efficiently redesign the expansion connector PCB 6 and PCB 7 with power electronics based on the requirements necessary for a specific type of autonomous vehicle without having to redesign the motherboard.

### Example 2 - Optimized FPV (First person view) drone control module with a common carrier PCB

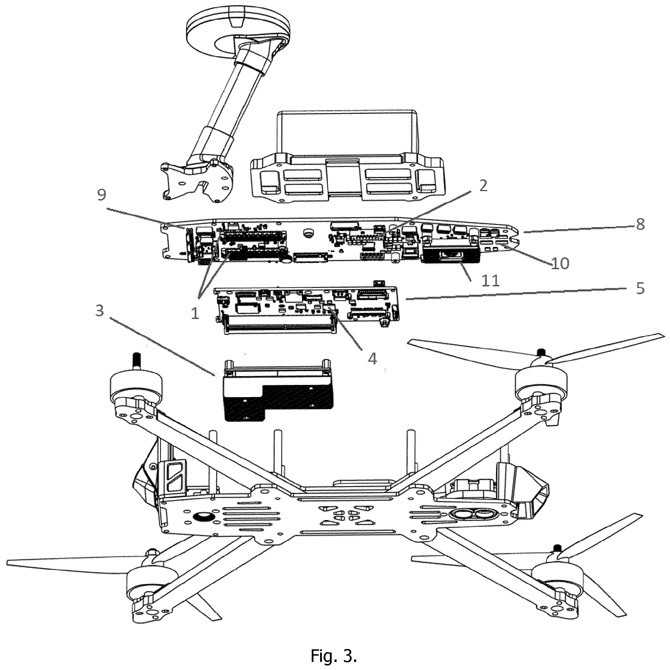

The FPV drone control module shown in fig. 3 contains the FMU module directly integrated on the motherboard 5. It is connected to the common carrier PCB 8 through the high-speed connector 1 and the power connector 2. The common carrier PCB 8 with a more robust design (thickness 2.4 mm and more) serves at the same time for mechanical purposes - it is part of the cover of the drone as well as the top plate ensuring the mechanical strength of the structure. The combined carrier PCB 8 was additionally surface treated to seal the technological holes on the PCB. This common carrier PCB 8 serves for the same purpose as the expansion connector PCB 6 and PCB 7 with power electronics. It provides multiple voltage levels for the motherboard 5, connection 10 for battery and power distribution for speed controllers in the rear, MIPI CSI connectors 9 for cameras in the front. In addition to the connectors, it is also equipped with a video transmitter and a video signal converter for the video transmitter.

The common carrier PCB 8 also contains power circuits, autopilot, control computer, camera signal processing, video transmitter 11, as well as interfaces for connecting the battery, receiver and module with motor controllers.

### Example 3 - Modular control system for a quadcopter

The modular control system for the quadcopter is, in addition to the components described in example 1, supplemented with additional circuits, namely:
- 4 electronic speed controllers.
- Circuits to controlled LED modules on drone arms with appropriate connectors.
- Combined connector of high-speed buses, which contains all the necessary lines for connecting useful peripherals, located outside the body of the drone, specific for a particular application.

### Example 4 - Modular control system for VTOL drones

The modular control system for fixed-wing VTOL drones contains similar circuits as in example 3 for quadcopters, while the number of electronic speed controllers depends on the total number of motors, including those for forward propulsion or combined drives (forward + upwards).

The module also contains control of LED modules, while these LED modules are placed as position lights at the end of the wings, the module also contains infrared LEDs for precise positioning.

The vehicle contains several control surfaces (elevator, turn signal... ), which are controlled by electric servo drives. Drives and control surfaces are duplicated due to redundancy. A voltage regulator with the possibility of increasing the supply voltage in dynamic mode (e.g. from 5V to 8V) is used to power these servo drives, located on the PCB with power electronics 7. The efficient routing of signal and power lines to the individual parts of the drone is ensured by the use of combined connectors located on PCB 7 so that the cable harnesses go directly to the designated parts of the drone, to the wing, tail, front part.

### Industrial applicability

The proposed solution can be used in autonomous VEHICLES (especially in drones), while the specific implementation can be easily realized by changing the expansion connector PCB and PCB with power electronics tailored to the given vehicle. A typical example can be a UAV of the multicopter type, a VTOL or an fixed wing drone, wheeled or tracked ground vehicles or maritime autonomous vehicles.

### List of reference signs

1. High speed connector for connection of expansion connector PCB
2. Power connector to connect PCB with power electronics
3. Computing module
4. FMU
5. Motherboard
6. Expansion connector PCB
7. PCB with power electronics
8. Common carrier PCB
9. CSI connectors for cameras
10. Connection battery and power distribution for speed controllers
11. Video transmitter

## Claims

1. A modular control system for autonomous vehicles comprising a motherboard (5), containing an FMU (4) and a computing module (3), **characterized in that** the motherboard (5) contains at least one high-speed connector (1) for connecting an expansion connector PCB (6) and at least one power connector (2) for connecting the PCB (7) with power electronics.

2. The modular control system for autonomous vehicles according to the claim 1, **characterized in that** it contains at least one expansion connector PCB (6) connected to the motherboard (5) via the high-speed connector (1) and at least one PCB (7) with power electronics connected to the motherboard (5) through the power connector (2).

3. The modular control system for autonomous vehicles according to the claim 2, **characterized in that** the expansion connector PCB (6) contains interfaces from the FMU, an interface of the computing unit, and optionally also additional expansion circuits such as voltage level converters, bus-to-bus converters, communication modules, an HDMI converter to CSI for video input, an HDMI to analog signal converter via video transmitter, USB to UART or USB to PWM converters, GMSL converters, LED light source drivers or interface types not directly supported by the system base; where the interfaces from the FMU are preferably UART, PWM, PPM, USB, ADC, I2C, SPI or CAN and the interface of the computing unit is preferably HDMI, PCIe, MIPI/CSI, USB, ethernet or CAN.

4. The modular control system for autonomous vehicles according to the claim 2 or 3, **characterized in that** the PCB (7) with power electronics contains power supply regulators and optionally current sensors, power supply switches, distribution of power supply, anti-spark unit, power supply selector, battery management system.

5. The modular control system for autonomous vehicles according to the claim 3, **characterized in that** the expansion connector PCB (6) and the PCB (7) with power electronics are combined into one common carrier PCB (8).

6. The modular control system according to any of the preceding claims, **characterized in that** the high-speed connector (1) for connecting the expansion connector PCB (6) is used from a series supporting a communication speed of 10GBps and a pin pitch of 0.5mm.

7. The modular control system according to any of the preceding claims, **characterized in that** the power connector (2) for connecting the PCB with power electronics includes a connector for connecting the power part and a connector for connecting the signal part, and where the connector for connecting the power part is "board to board" connector with current load min. 5A per pin and connecting height max. 6 mm, and the connector for connecting the signal part is a signal connector with the same connecting height as the connector for connecting the power part

8. The modular control system according to any one of the claims 2 to 6, **characterized in that** the expansion connector PCB (6) is attached to the motherboard (5) with mounting screws, which correspond to the mounting threads on the motherboard (5) in their location.

9. The modular control system according to any one of the claims 2 to 8, **characterized in that** the PCB (7) with power electronics is attached to the motherborad (5) by standoffs, which correspond to the mounting holes on the motherboard (5).

10. The modular control system according to any one of the claims 2 to 4 **characterized in that** at least one expansion connector PCB (6) and/or PCB (7) with power electronics are load-bearing elements of an autonomous vehicle to ensure its mechanical strength and preferably also serve as a cover part of the autonomous vehicle.

11. The modular control system according to the claim 5, **characterized in that** at least one common carrier PCB (8) is a load-bearing element of an autonomous vehicle to ensure its mechanical strength and preferably also serves as a cover part of the autonomous vehicle.

12. An autonomous vehicle comprising the modular control system according to any one of the claims 1 to 11.
